# EUROPEAN PATENT APPLICATION

(11) **EP 4 618 578 A1**
(43) Date of publication of application: **17.09.2025**
(21) Application number: 23889280.6
(22) Date of filing: 10.11.2023
(51) Int. Cl.: H04N 23/63, H04N 23/62

(54) **PHOTOGRAPHIC PAGE DISPLAY METHOD AND APPARATUS, AND ELECTRONIC DEVICE AND STORAGE MEDIUM**

(30) Priority: 10.11.2022 CN 202211406505
(71) Applicant: Lemon Inc., Grand Cayman, KY1-1205 (KY)
(72) Inventor: XU, Feng, Beijing 100028 (CN)
(74) Representative: Isarpatent
(86) International application number: PCT/SG2023/050748
(87) International publication number: WO 2024/102080

(57) **Abstract**

Provided are a method for displaying a capturing interface, an electronic device, and a storage medium. The method includes receiving an effect preview instruction for a target effect; and in response to the effect preview instruction, displaying a target preview in a first area of the capturing interface and displaying target media content in a second area of the capturing interface. The target preview is a preview of a picture captured with the target effect. The target media content is media content recorded with the target effect. The embodiments of the present disclosure can enrich display content of capturing interface when an effect is previewed.

## Description

This application claims priority to Chinese Patent Application No. 202211406505.9 filed Nov. 10, 2022, the disclosure of which is incorporated herein by reference in its entirety.

### TECHNICAL FIELD

Embodiments of the present disclosure relate to a method for displaying a capturing interface, an electronic device, and a non-transitory computer-readable storage medium.

### BACKGROUND

At present, after a user selects an effect, the preview of the effect selected by the user can be displayed in a capturing interface for the user to preview. However, the display content of a capturing interface is relatively single when an effect is previewed.

### SUMMARY

Embodiments of the present disclosure provide a method and an apparatus for displaying a capturing interface, an electronic device, and a storage medium to enrich display content of a capturing interface when an effect is previewed.

In a first aspect, an embodiment of the present disclosure provides a method for displaying a capturing interface. The method includes the steps below.

An effect preview instruction for a target effect is received.

In response to the effect preview instruction, a target preview is displayed in a first area of the capturing interface, and target media content is displayed in a second area of the capturing interface. The target preview is a preview of a picture captured with the target effect. The target media content is media content recorded with the target effect.

In a second aspect, an embodiment of the present disclosure provides a display apparatus for displaying a capturing interface. The display apparatus includes an instruction receiving module and a preview module.

The instruction receiving module is configured to receive an effect preview instruction for a target effect.

The preview module is configured to, in response to the effect preview instruction, display a target preview in a first area of the capturing interface, and display target media content in a second area of the capturing interface. The target preview is a preview of a picture captured with the target effect. The target media content is media content recorded with the target effect.

In a third aspect, an embodiment of the present disclosure provides an electronic device. The device includes one or more processors and a memory configured to store one or more programs.

The one or more programs, when executed by the one or more processors, cause the one or more processors to execute the method for displaying a capturing interface according to the embodiment of the present disclosure.

In a fourth aspect, an embodiment of the present disclosure provides a computer-readable storage medium. The storage medium stores a computer program. The computer program, when executed by a processor, causes the processor to execute the method for displaying a capturing interface according to the embodiment of the present disclosure.

### BRIEF DESCRIPTION OF DRAWINGS

The preceding and other features, advantages, and aspects of each embodiment of the present disclosure become more apparent with reference to the specific implementations hereinafter in conjunction with drawings. Same or similar reference numerals in the drawings denote same or similar elements. It is to be understood that the drawings are illustrative and that originals and elements are not necessarily drawn to scale.
FIG. 1 is a flowchart of a method for displaying a capturing interface according to an embodiment of the present disclosure.
FIG. 2 is a display diagram of a capturing interface according to an embodiment of the present disclosure.
FIG. 3 is a flowchart of another method for displaying a capturing interface according to an embodiment of the present disclosure.
FIG. 4 is a display diagram of an effect interface according to an embodiment of the present disclosure.
FIG. 5 is a display diagram of another effect interface according to an embodiment of the present disclosure.
FIG. 6 is a block diagram illustrating the structure of an apparatus for displaying a capturing interface according to an embodiment of the present disclosure.
FIG. 7 is a diagram illustrating the structure of an electronic device according to an embodiment of the present disclosure.

### DETAILED DESCRIPTION

Embodiments of the present disclosure are described in more detail hereinafter with reference to the drawings. Although some embodiments of the present disclosure are shown in the drawings, it is to be understood that the present disclosure may be implemented in various forms and should not be construed as limited to the embodiments set forth herein. Conversely, these embodiments are provided so that the present disclosure is thoroughly and completely understood. It should be understood that drawings and embodiments of the present disclosure are merely illustrative and are not intended to limit the scope of the present disclosure.

It is to be understood that the various steps recorded in the method embodiments of the present disclosure may be performed in a different order, and/or in parallel. In addition, the method embodiments may include additional steps and/or omit performing the illustrated steps. The scope of the present disclosure is not limited in this respect.

As used herein, the term "include" and variations thereof are intended to be inclusive, that is, "including, but not limited to". The term "based on" is "at least partially based on". The term "one embodiment" means "at least one embodiment"; the term "another embodiment" means "at least one another embodiment"; and the term "some embodiments" means "at least some embodiments". Related definitions of other terms are given in the description hereinafter.

It is to be noted that references to "first", "second" and the like in the present disclosure are merely intended to distinguish one from another apparatus, module, or unit and are not intended to limit the order or interrelationship of the functions performed by the apparatus, module, or unit.

It is to be noted that references to modifications of "one" or "a plurality" mentioned in the present disclosure are intended to be illustrative and not limiting; and those skilled in the art should understand that "one" or "a plurality" should be understood as "one or more" unless clearly expressed in the context.

The names of messages or information exchanged between multiple apparatuses in embodiments of the present disclosure are only for illustrative purposes and are not intended to limit the scope of such messages or information.

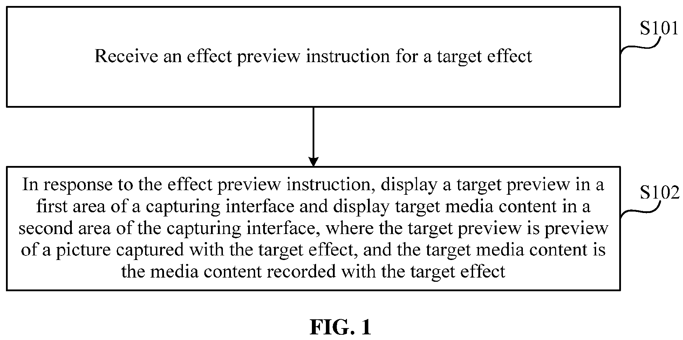

FIG. 1 is a flowchart of a method for displaying a capturing interface according to an embodiment of the present disclosure. This method may be executed by an apparatus for displaying a capturing interface. The apparatus may be implemented by software and/or hardware and may be configured in an electronic device. For example, the apparatus may be configured in a mobile phone or a tablet computer. The method for displaying a capturing interface provided by this embodiment of the present disclosure is applicable to the scenario where an effect is previewed in the capturing interface. As shown in FIG. 1, the method for displaying a capturing interface provided by this embodiment may include the steps below.

In S101, an effect preview instruction for a target effect is received.

The effect preview instruction may be a trigger instruction for instructing to preview the effect of a certain effect, for example, such as an instruction for triggering a certain effect identifier displayed in an effect interface or a gesture instruction for instructing to preview the effect of a certain effect. The target effect may be an effect corresponding to the effect preview instruction, for example, a to-be-previewed effect as indicated by the effect preview instruction.

In this embodiment, when a user wants to view the effect of a certain effect, the user may execute the effect preview instruction for the effect. Accordingly, the current application may receive the effect preview instruction executed by the user.

In S102, in response to the effect preview instruction, a target preview is displayed in a first area of the capturing interface, and target media content is displayed in a second area of the capturing interface, where the target preview is a preview of a picture captured with the target effect, and the target media content is media content recorded with the target effect.

The first area and the second area may be two different areas in the capturing interface. There may or may not be an overlapping area between the first area and the second area. For example, the second area may be located in the first area. For example, the first area may be a main display area of the capturing interface, and the second area may be a sub-area in the main display area of the capturing interface. The description below is given by taking an example of this case.

The target media content may be the media content recorded with the target effect. The target media content may be the media content provided by the operator of the current application or the media content published by a publisher on the platform corresponding to the current application. For example, the media content may be video content, picture content, or image and text content. This embodiment does not limit the determination manner of the target media content and the media content type of the target media content. The target preview may be understood as the preview of a picture captured with the target effect. The preview of a certain effect may be an image used for displaying the effect of the effect, for example, an image obtained by using the effect to process a real-time image acquired by a camera.

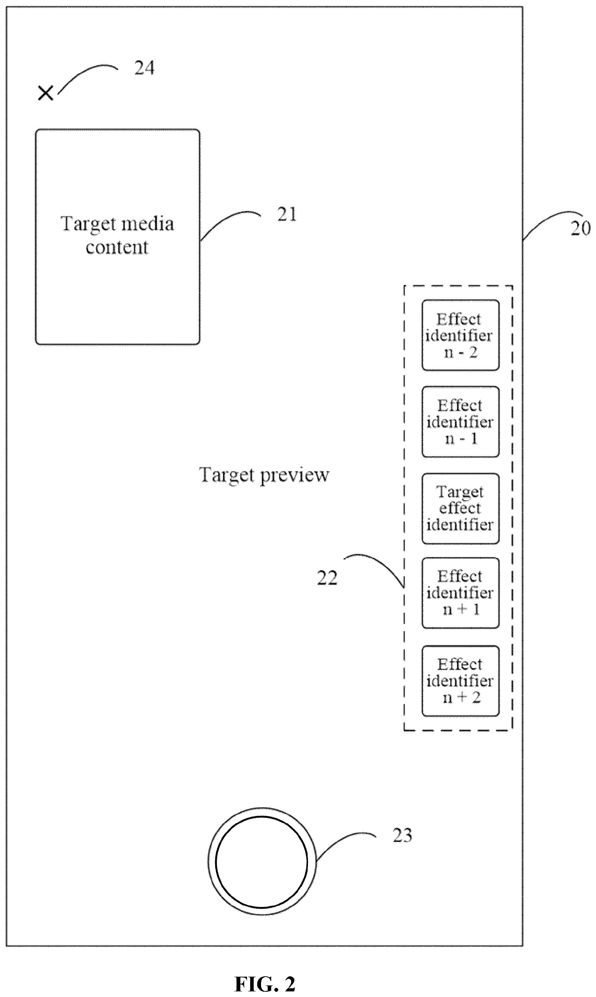

For example, as shown in FIG. 2, when the effect preview instruction for the target effect is received, in response to the effect preview instruction, the preview of a picture captured with the target effect may be displayed in the first area 20 of the capturing interface, and the media content recorded with the target effect is displayed in the second area 21 of the capturing interface. For example, a video captured with the target effect is played in the second area 21, or picture content or image and text content captured with the target effect are displayed in the second area 21.

In this embodiment, the previewed effect of an effect is displayed in the capturing interface, and at the same time, the media content recorded with a corresponding effect is further displayed in the capturing interface. In this manner, more comprehensive information of the effect can be displayed to the user, and the display content of the capturing interface is enriched when an effect is previewed. Moreover, since the user may view the previewed effect of the effect and the media content recorded with the effect at the same time in the capturing interface, the user does not need to view the media content in a media content display page and then enter the capturing interface for capturing, or the user does not need to view the previewed effect of the effect in the capturing interface and then enter another media content display page to view the media content recorded with a previewed effect. In this manner, the operations required to view the media content recorded with the previewed effect can be simplified.

Continuing to refer to FIG. 2, when the effect preview instruction for the target effect is received, in addition to displaying the target preview in the first area 20 of the capturing interface and displaying the target media content in the second area 21 of the capturing interface, at least one effect identifier including the effect identifier of the target effect may be further displayed in a third area 22 of the capturing interface. In this manner, the user can clarify the currently previewed effect, the switch mode of the current previewed effect is enriched, and the operation required for switching effects is simplified.

At this time, optionally, the method for displaying a capturing interface provided by this embodiment further includes that, in response to the effect preview instruction, at least one effect identifier is displayed in the third area of the capturing interface. The at least one effect identifier includes the target effect identifier of the target effect.

The current previewed effect may be considered as the effect of which the preview is currently displayed in the capturing interface, that is, the effect of which the effect is currently previewed by the user in the capturing interface.

The third area, the first area, and the second area may be different areas in the capturing interface. For example, the third area may be located in the first area. For example, the third area may be located in a preset area at the right boundary position/left boundary position of the main display area of the capturing interface. This embodiment does not limit the specific display size and display position of the third area of the capturing interface. Optionally, the display size of the third area may be smaller than the display size of the effect interface.

The target effect identifier may be understood as the effect identifier of the target effect. The effect identifier may be considered as the identifier of an effect. Different effect identifiers may be used for identifying different effects. The number of effect identifiers displayed in the third area may be set as required. For example, three or five effect identifiers may be displayed in the third area. The arrangement sequence of the effect identifiers in the third area may be the same as or different from the arrangement sequence of the effect identifiers in the effect interface. When the third area is initially displayed, the effect identifier of the target effect may be displayed at a preset position in the third area, such as at the first capturing identifier position, the middle position, or the last effect identifier position in the third area.

In some implementations, after the at least one effect identifier is displayed in the third area of the capturing interface, the method further includes that, in response to an identifier switch instruction, an effect identifier displayed in the third area is switched.

In the preceding implementations, the user may switch the effect identifier displayed in the third area to view a different effect identifier or perform an effect switch instruction on the effect corresponding to the corresponding effect identifier.

The identifier switch instruction may be a trigger instruction for instructing to switch the effect identifier displayed in the third area, such as an instruction for triggering a corresponding button in the capturing interface or a sliding instruction in a preset direction in the third area. For example, the preset direction may be the same as or different from the arrangement direction of the effect identifiers in the third area.

Specifically, when it is detected that the user performs the identifier switch instruction, the effect identifier displayed in the third area may be switched based on the identifier switch instruction. For example, each effect identifier is vertically arranged in the third area, and when it is detected that the user slides vertically in the third area, the user can control each effect identifier displayed in the third area to move in the sliding direction of the user, so that the effect identifier displayed in the third area is switched.

In some implementations, after the at least one effect identifier is displayed in the third area of the capturing interface, the method further includes that, in response to a second adjustment instruction for the third area, the display position of the third area is adjusted.

The second adjustment instruction may be a trigger instruction for instructing to adjust the display position of the third area in the capturing interface, for example, a dragging instruction for the third area.

In the preceding implementations, the user may adjust the display position of the third area in the capturing interface as required, for example, the user may adjust the display position of the third area in the capturing interface by performing an adjustment instruction for the third area. In this manner, when the current application receives the adjustment instruction of the user on the third area, the display position of the third area in the capturing interface may be adjusted based on the adjustment instruction to further enrich the display form of the third area, thereby satisfying the requirement of personalized display of the third area by the user. Moreover, convenience is provided for the user to view images displayed in the first area and/or the third area.

The adjustable range of the display position of the third area may be flexibly set, for example, it may be configured that the display position of the third area is adjusted in the main display area of the entire capturing interface, or it may be configured that the display position of the third area is adjusted in the preset adjustment area of the capturing interface. Taking the third area being located in the first area as an example, the preset adjustment area may be, for example, a preset boundary area of the first area, such as one or more of the upper boundary area, the lower boundary area, the left boundary area, or the right boundary area of the first area. The effect identifiers may be arranged laterally or vertically in the third area. For example, when the third area is located in the upper boundary area or the lower boundary area of the first area, the effect identifiers may be arranged laterally in the third area. When the third area is located in the left boundary area or the right boundary area of the first area, the effect identifiers may be arranged vertically in the third area. A certain boundary area of the first area may be a preset area near the boundary, for example, a preset area using the corresponding boundary of the preset area as a boundary.

In the method for displaying a capturing interface provided by this embodiment, the effect preview instruction for the target effect is received; and in response to the effect preview instruction, the target preview is displayed in the first area of the capturing interface, and the target media content is displayed in the second area of the capturing interface. The target preview is the preview of a picture captured with the target effect. The target media content is the media content recorded with the target effect. In the preceding schemes adopted by this embodiment, the previewed effect of the effect is displayed in the capturing interface, and at the same time, the media content recorded with the corresponding effect is further displayed in the capturing interface. In this manner, more comprehensive information of the effect can be displayed to the user, and the display content of the capturing interface is enriched when an effect is previewed. Moreover, the operations required to view the media content recorded with the previewed effect can be simplified.

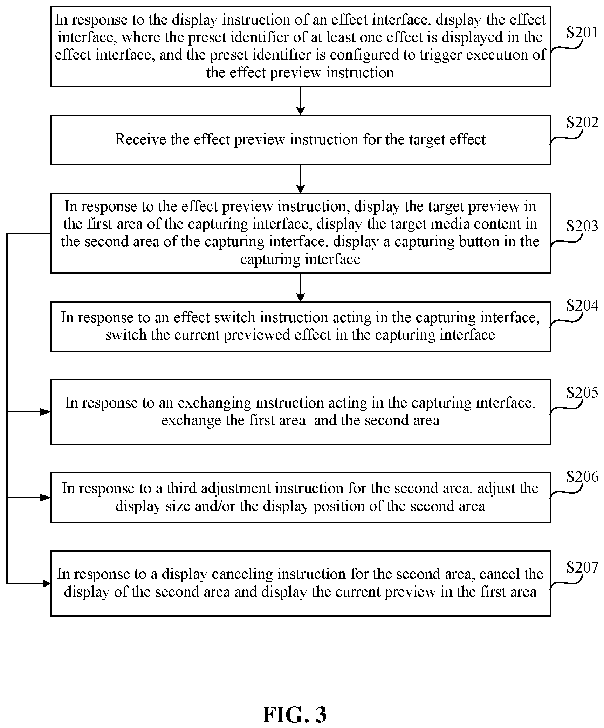

FIG. 3 is a flowchart of another method for displaying a capturing interface according to an embodiment of the present disclosure. The schemes in this embodiment may be combined with one or more optional schemes in the preceding embodiment. Optionally, before the effect preview instruction for the target effect is received, the method further includes that, in response to display instruction of an effect interface, the effect interface is displayed. A preset identifier of at least one effect is displayed in the effect interface. The preset identifier is configured to trigger execution of the effect preview instruction.

Optionally, the method for displaying a capturing interface provided by this embodiment further includes that, in response to the effect preview instruction, a capturing button is displayed in the capturing interface. The capturing button is configured to trigger capturing with the current previewed effect.

Optionally, after the target preview is displayed in the first area of the capturing interface, and the target media content is displayed in the second area of the capturing interface, the method further includes that, in response to an effect switch instruction acting in the capturing interface, the current previewed effect in the capturing interface is switched.

Optionally, after the target preview is displayed in the first area of the capturing interface, and the target media content is displayed in the second area of the capturing interface, the method further includes that, in response to an exchanging instruction acting in the capturing interface, the first area and the second area are exchanged.

Optionally, after the target preview is displayed in the first area of the capturing interface, and the target media content is displayed in the second area of the capturing interface, the method further includes at least one of the following: In response to a third adjustment instruction for the second area, the display size of the second area and/or the display position of the second area is adjusted; or in response to a display canceling instruction for the second area, display of the second area is canceled, and the current preview is displayed in the first area. The current preview is the preview of a current picture captured with the current previewed effect.

Accordingly, as shown in FIG. 3, the method for displaying a capturing interface provided by this embodiment may include the steps below.

In S201, in response to a display instruction of an effect interface, the effect interface is displayed, where a preset identifier of at least one effect is displayed in the effect interface, and the preset identifier is configured to trigger execution of an effect preview instruction.

The display instruction of the effect interface may be a trigger instruction for instructing the display of the effect interface, for example, an operation for triggering an effect button displayed in the capturing interface. The effect interface may be configured to display the preset identifier of the effect, so that the user selects the effect for a preview and/or capturing.

The preset identifier of an effect may be configured to identify the corresponding effect. For example, the preset identifier includes an effect identifier and/or a previewed picture. The previewed picture is captured with a corresponding effect. Optionally, the preset identifier may include a previewed picture, so that the user quickly views the effect of the corresponding effect and the operations required for the user to view the effect of an effect and determine a to-be-adopted effect can be further simplified.

The effect identifier may be the identifier of an effect, for example, an effect icon of the effect. The previewed picture of the effect may be a picture captured with the corresponding effect, and the picture may or may not be located in the media content recorded with the corresponding effect. The previewed picture of the effect may include one or more pictures. When the previewed picture includes multiple pictures, each picture may be switched and displayed. For example, the previewed picture may be located in the media content recorded with the corresponding effect, for example, one or more pictures may be extracted from the corresponding media content and used as the previewed picture. The previewed picture may be a static picture or a dynamic picture.

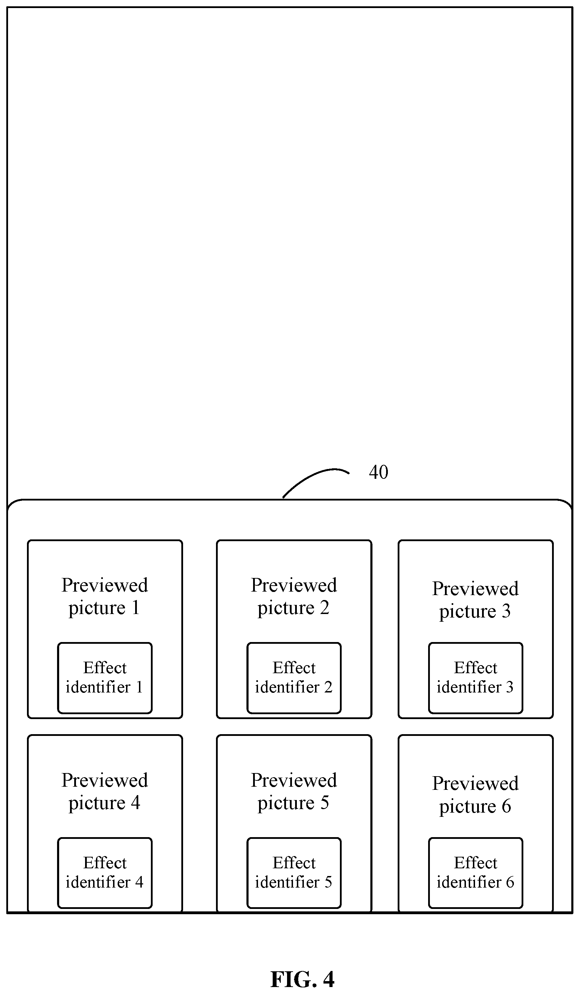

For example, when the capturing interface is displayed, an image acquired by a camera in real time may be displayed in the capturing interface, and a capturing button and an effect button may be displayed in the capturing interface. When the display instruction of the effect interface is received, for example, when it is detected that the user triggers the effect button displayed in the capturing interface, the effect interface 40 may be displayed in the capturing interface, and the preset identifier of each effect may be displayed in the effect interface 40, as shown in FIG. 4 (in the figure, using an example in which the preset identifier includes an effect identifier and a previewed picture).

In this embodiment, after the effect interface is displayed, the display size of the effect interface can further be adjusted based on the adjustment instruction of the user with respect to the effect interface. For example, the display size of the effect interface is increased or decreased, so that the display form of the effect interface is further enriched, and different viewing requirements of the user for an image acquired by the camera or an effect are satisfied. At this time, optionally, after the effect interface is displayed, the method further includes that, in response to a first adjustment instruction for the effect interface, the display size of the effect interface is adjusted. The first adjustment instruction may be an instruction for adjusting the display size of the effect interface, for example, a sliding instruction starting in the preset top area of the effect interface and in a set direction.

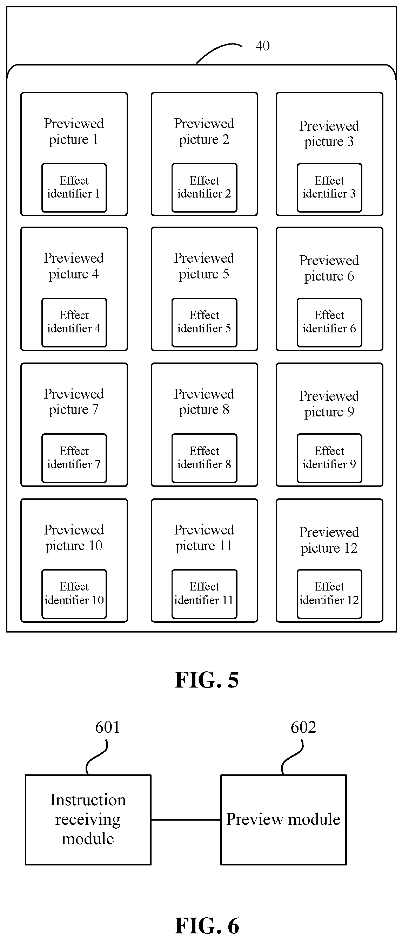

Taking the set direction being a vertical direction as an example, when the effect interface 40 is displayed in response to the display instruction of the effect interface, the effect interface 40 may be displayed as a first size, as shown in FIG. 4. When it is detected that the user slides upwards in the top area of the effect interface 40, the effect interface 40 may be displayed as a second size, for example, the size of the effect interface 40 is increased from the first size to the second size, as shown in FIG. 5. When it is detected that the user slides downwards in the top area of the effect interface 40, the effect interface 40 may be displayed as the first size, or the display of the effect interface 40 may be canceled. For example, for the case where the effect interface 40 is currently displayed as the second size, the size of the effect interface 40 may be reduced from the second size to the first size, as shown in FIG. 4. For the case where the effect interface 40 is currently displayed as the first size, there may be no response to the sliding instruction, or the display of the effect interface 40 may be canceled.

In S202, an effect preview instruction for a target effect is received.

In S203, in response to the effect preview instruction, a target preview is displayed in a first area of the capturing interface, and target media content is displayed in a second area of the capturing interface, and a capturing button is displayed in the capturing interface. One or more of S204, S205, S206, and S207 are executed. The target preview is the preview of a picture captured with the target effect. The target media content is the media content recorded with the target effect. The capturing button is configured to trigger capturing with the current previewed effect.

In this embodiment, as shown in FIGS. 4 and 5, since the display of the effect interface 40 may block the preview and/or the capturing button 23 of the target effect, when the effect preview instruction is received, the capturing button 23 may be displayed in the capturing interface, as shown in FIG. 2. In this manner, the user can view the preview of a current picture captured with the current previewed effect and use the current previewed effect to capturing by triggering the capturing button 23. There is no need to close the effect interface 40 for capturing by performing a corresponding trigger instruction after the effect preview instruction is performed, and it is possible to simplify the operation required for the user to preview the effect and use the previewed effect to capture.

In S204, in response to an effect switch instruction acting in the capturing interface, a current previewed effect in the capturing interface is switched.

The effect switch instruction may be a trigger instruction for instructing to switch the current previewed effect. The effect switch instruction may be applied to the first area, the second area, and/or the third area, such as an instruction of sliding in a preset sliding direction in the first area and/or the second area or an instruction for triggering a certain effect identifier displayed in the third area. For example, the preset direction may be a vertical direction.

Specifically, when the effect switch instruction of the user is received, an effect after switching may be determined based on the effect switch instruction, and the preview of the effect after switching and/or the media content captured with the effect after switching may be displayed on the capturing interface.

Taking the preset sliding direction being a vertical direction as an example, when it is detected that the user slides upwards in the capturing interface, the preview of the next effect of the current previewed effect in a preset effect ordering and/or the media content recorded with the next effect may be displayed in the capturing interface. When it is detected that the user slides downwards in the capturing interface, the preview of the previous effect of the current previewed effect in the preset effect ordering and/or the media content recorded with the previous effect may be displayed in the capturing interface. The preset effect sorting may be, for example, an arrangement sequence in which effect identifiers of the effects are displayed in the effect interface or the third area.

Alternatively, when it is detected that the user triggers the effect identifier of a certain effect displayed in the third area, the preview of the effect and/or the media content recorded with the effect may be displayed in the capturing interface.

When the preview of the effect after switching and/or the media content recorded with the effect after switching is displayed in the capturing interface, for example, if there is a preview displayed in the first area of the capturing interface before switching and there is media content displayed in the second area before switching, in response to the effect switch instruction, the preview of the effect after switching is displayed in the first area of the capturing interface, and the media content recorded with the effect after switching is displayed in the second area of the capturing interface; if there is media content displayed in the first area of the capturing interface before switching and there is a preview displayed in the second area before switching, in response to the effect switch instruction, the media content recorded with the effect after switching is displayed in the first area of the capturing interface; the preview of the effect after switching is displayed in the second area of the capturing interface; and if only the preview is displayed in the capturing interface before switching and the media content is not displayed, in response to the effect switch instruction, only the preview of the effect after switching is displayed on the capturing interface.

In addition, when the current previewed effect in the capturing interface is switched, the effect identifier displayed in the third area may be switched. For example, the effect identifier of the current previewed effect after switching is moved to a preset position in the third area for display. Alternatively, the effect identifier displayed in the third area may not be switched. This is not limited in this embodiment.

In this embodiment, the current previewed effect in the capturing interface may be switched by the effect switch instruction in the capturing interface and the effect interface does not need to be re-opened and closed. In this manner, on the premise of the block of the image displayed on the capturing interface is reduced, the instruction required for switching the current previewed effect can be simplified.

In S205, in response to an exchanging instruction acting in the capturing interface, the first area and the second area are exchanged.

The switching instruction may be considered as a trigger instruction for instructing to exchange the area where the preview is displayed and the area where the media content is displayed, for example, a click instruction acting in the first area or the second area. Exchanging of the area where the preview is displayed and the area where the media content is displayed may be considered as exchanging of the area where the preview is displayed and the media content where the area is displayed. The current preview may be the preview of a current picture captured with the current previewed effect in the capturing interface, for example, a preview currently displayed in the capturing interface. The current media content may be the media content recorded with the current previewed effect, for example, media content currently displayed in the capturing interface.

Specifically, when the switching instruction acting in the capturing interface is received, for example, when the click instruction acting in the second area is detected, the area where the current preview is displayed and the area where the current media content is displayed in the capturing interface may be exchanged.

For example, if before the switching instruction is received, the preview of a current picture captured with the current previewed effect is displayed in the first area, and the media content recorded with the current previewed effect is displayed in the second area, when the switching instruction is received, the preview of a current picture captured with the current previewed effect may be exchanged to the second area for display, and the media content recorded with the current previewed effect may be exchanged to the first area for display. If before the switching instruction is received, the media content recorded with the current previewed effect is displayed in the first area, and the preview of a current picture captured with the current previewed effect is displayed in the second area, when the exchanging instruction is received, the media content recorded with the current previewed effect may be exchanged to the second area for display, and the preview of the picture captured with the current previewed effect may be exchanged to the first area for display.

In S206, in response to a third adjustment instruction for the second area, a display size of the second area and/or a display position of the second area is adjusted.

The third adjustment instruction may be an instruction for instructing to adjust the display size and/or the display position of the second area in the capturing interface, for example, such as a multi-finger scaling instruction or a dragging instruction acting in the second area. The multi-finger scaling instruction may include, for example, a multi-finger amplification instruction and/or a multi-finger reduction instruction.

For example, when the third adjustment instruction for the second area is received, the display size and/or the display position of the second area may be adjusted according to the third adjustment instruction. Specifically, when the third adjustment instruction for instructing to adjust the display size of the second area is received, for example, when the multi-finger scaling instruction acting in the second area is detected, the second area may be scaled according to the third adjustment instruction to adjust the display size of the second area. When a trigger instruction for instructing to adjust the display position of the second area is received, for example, when the dragging instruction acting in the second area is detected, the display position of the second area may be adjusted according to the third adjustment instruction.

In S207, in response to a display canceling instruction for the second area, the display of the second area is canceled, and the current preview is displayed in the first area.

The display canceling instruction may be a trigger instruction for instructing to cancel the display of the second area 21, for example, an instruction for triggering a closing button 24 (as shown in FIG. 2) corresponding to the second area 21.

In this embodiment, the user may instruct the current application to cancel the display of the media content recorded with the current previewed effect as required.

Specifically, when the display canceling instruction for the second area is received, the display of the second area may be canceled, and the current preview may be displayed in the first area of the capturing interface. For example, if before the display canceling instruction for the second area is received, the current preview is displayed in the first area, and the current media content is displayed in the second area, when the display canceling instruction for the second area is received, the display of the second area and the current media content displayed in the second area are canceled, and the current preview is kept displayed in the first area. If before the display canceling instruction for the second area is received, and the current media content is displayed in the first area, and the current preview is displayed in the second area, when the display canceling instruction for the second area is received, the display of the second area and the current media content displayed in the first area are canceled, and the current preview is adjusted to the first area for display.

In the preceding technical schemes adopted by this embodiment, the display style of the capturing interface can be further enriched, and the operation required for capturing with the current previewed effect can be simplified.

FIG. 6 is a block diagram illustrating the structure of an apparatus for displaying a capturing interface according to an embodiment of the present disclosure. The apparatus may be implemented by software and/or hardware and may be configured in an electronic device. For example, the apparatus may be configured in a mobile phone or a tablet computer. The apparatus may display the preview of an effect and the media content recorded with the effect in the capturing interface by performing the method for displaying a capturing interface. As shown in FIG. 6, the apparatus for displaying a capturing interface provided by this embodiment may include an instruction receiving module 601 and a preview module 602.

The instruction receiving module 601 is configured to receive an effect preview instruction for a target effect.

The preview module 602 is configured to, in response to the effect preview instruction, display a target preview in a first area of the capturing interface, and display target media content in a second area of the capturing interface. The target preview is a preview of a picture captured with the target effect. The target media content is media content recorded with the target effect.

In the apparatus for displaying a capturing interface provided by this embodiment, the instruction receiving module receives the effect preview instruction for the target effect; and in response to the effect preview instruction, the preview module displays the target preview in the first area of the capturing interface and the target media content in the second area of the capturing interface. The target preview is the preview of a picture captured with the target effect. The target media content is the media content recorded with the target effect. In the preceding technical schemes adopted by this embodiment, the previewed effect of the effect is displayed in the capturing interface, and at the same time, the media content recorded with the corresponding effect is further displayed in the capturing interface. In this manner, more comprehensive information of the effect can be displayed to the user, and the display content of the capturing interface is enriched when an effect is previewed. Moreover, the operations required to view the media content recorded with the previewed effect can be simplified.

Further, the apparatus for displaying a capturing interface provided by this embodiment may further include an interface display module. The interface display module is configured to, before the effect preview instruction for the target effect is received, in response to a display instruction of an effect interface, display the effect interface. A preset identifier of at least one effect is displayed in the effect interface. The preset identifier is configured to trigger execution of the effect preview instruction.

In the preceding schemes, the preset identifier may include an effect identifier and/or a previewed picture. The previewed picture may be captured with a corresponding effect.

Further, the apparatus for displaying a capturing interface provided by this embodiment may further include a first adjustment module. The first adjustment module is configured to, after the effect interface is displayed, in response to a first adjustment instruction for the effect interface, adjust a display size of the effect interface.

In the preceding solutions, the preview module 602 may further be configured to, in response to the effect preview instruction, display a capturing button in the capturing interface. The capturing button is configured to trigger capturing with the current previewed effect.

In the preceding schemes, the preview module 602 may further be configured to, in response to the effect preview instruction, display at least one effect identifier in a third area of the capturing interface. The at least one effect identifier includes a target effect identifier of the target effect.

Further, the apparatus for displaying a capturing interface provided by this embodiment may further include at least one of an identifier switch module or a second adjustment module. The identifier switch module is configured to, after the at least one effect identifier is displayed in the third area of the capturing interface, in response to the identifier switch instruction, switch the effect identifier displayed in the third area. The second adjustment module is configured to, in response to the second adjustment instruction for the third area, adjust the display position of the third area.

Further, the apparatus for displaying a capturing interface provided by this embodiment may further include an effect switch module. The effect switch module is configured to, after the target preview is displayed in the first area of the capturing interface, and the target media content is displayed in the second area of the capturing interface, in response to the effect switch instruction acting in the capturing interface, switch the current previewed effect in the capturing interface.

Further, the apparatus for displaying a capturing interface provided by this embodiment may further include an area interaction module. The area interaction module is configured to, after the target preview is displayed in the first area of the capturing interface, and the target media content is displayed in the second area of the capturing interface, in response to the switching instruction acting in the capturing interface, exchange the area where the current preview is displayed and the area where the current media content is displayed. The current preview is the preview of a current picture captured with the target effect. The current media content is the media content recorded with the current previewed effect.

Further, the apparatus for displaying a capturing interface provided by this embodiment may further include at least one of a third adjustment module or a cancel display module. The third adjustment module is configured to, after the target preview is displayed in the first area of the capturing interface, and the target media content is displayed in the second area of the capturing interface, in response to the third adjustment instruction for the second area, adjust the display size of the second area and/or the display position of the second area. The cancel display module is configured to, after the target preview is displayed in the first area of the capturing interface, and the target media content is displayed in the second area of the capturing interface, in response to the display canceling instruction for the second area, cancel the display of the second area and display the current preview in the first area. The current preview is the preview of a current picture captured with the target effect.

The apparatus for displaying a capturing interface provided by this embodiment of the present disclosure may execute the method for displaying a capturing interface provided by any embodiment of the present disclosure and has functional modules and beneficial effects corresponding to the method for displaying a capturing interface executed. For technical details not described in detail in this embodiment, reference may be made to the method for displaying a capturing interface provided by any embodiment of the present disclosure.

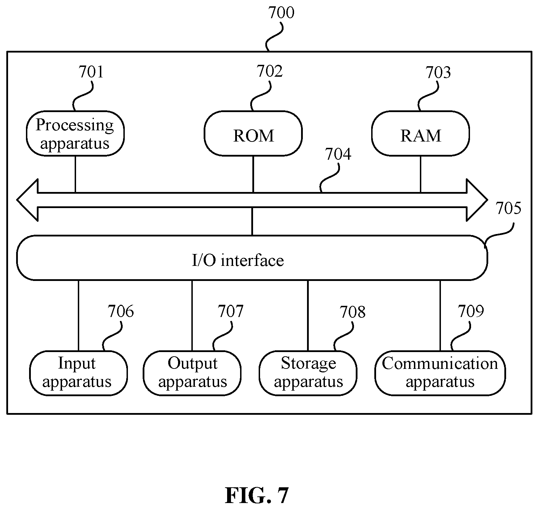

Referring to FIG. 7, FIG. 7 shows a diagram illustrating the structure of an electronic device 700 (for example, a terminal device) applicable to implementing embodiments of the present disclosure. A terminal device in the embodiments of the present disclosure may include, but is not limited to, a mobile terminal such as a mobile phone, a laptop, a digital broadcast receiver, a personal digital assistant (PDA), a PAD, a portable media player (PMP), and a vehicle-mounted terminal (for example, a vehicle-mounted navigation terminal) and a fixed terminal such as a digital television (TV) and a desktop computer. The electronic device shown in FIG. 7 is merely an example and is not intended to limit the function and usage scope of the embodiments of the present disclosure.

As shown in FIG. 7, the electronic device 700 may include the processing apparatus 701 (such as a central processing unit and a graphics processing unit). The processing apparatus 701 may perform various types of appropriate operations and processing based on a program stored in the read-only memory (ROM) 702 or a program loaded from the storage apparatus 708 to the random-access memory (RAM) 703. Various programs and data required for the operation of the electronic device 700 are also stored in the RAM 703. The processing apparatus 701, the ROM 702, and the RAM 703 are connected to each other through a bus 704. An input/output (I/O) interface 705 is also connected to the bus 704.

Generally, the following apparatuses may be connected to the I/O interface 705: an input apparatus 706 such as a touch screen, a touch pad, a keyboard, a mouse, a camera, a microphone, an accelerometer, and a gyroscope; an output apparatus 707 such as a liquid-crystal display (LCD), a speaker, and a vibrator; the storage apparatus 708 such as a magnetic tape and a hard disk; and a communication apparatus 709. The communication apparatus 709 may allow the electronic device 700 to perform wireless or wired communication with other devices to exchange data. Although FIG. 7 shows the electronic device 700 having various apparatuses, it is to be understood that not all of the apparatuses shown herein need to be implemented or present. Alternatively, more or fewer apparatuses may be implemented or present.

Particularly, according to the embodiments of the present disclosure, the process described above with reference to the flowchart may be implemented as a computer software program. For example, the embodiments of the present disclosure include a computer program product. The computer program product includes a computer program carried in a non-transitory computer-readable medium. The computer program includes program codes for executing the method shown in the flowchart. In such an embodiment, the computer program may be downloaded from a network and installed through the communication apparatus 709, or may be installed from the storage apparatus 708, or may be installed from the ROM 702. When the computer program is executed by the processing apparatus 701, the preceding functions defined in the method of the embodiments of the present disclosure are performed.

It is to be noted that the preceding computer-readable medium in the present disclosure may be a computer-readable signal medium, or a computer-readable storage medium, or any combination thereof. The computer-readable storage medium, for example, may be, but is not limited to, an electronic, magnetic, optical, electromagnetic, infrared or semiconductor system, apparatus or device, or any combination thereof. More specific examples of the computer-readable storage medium may include, but are not limited to, an electrical connection with one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical memory device, a magnetic memory device, or any appropriate combination thereof. In the present disclosure, the computer-readable storage medium may be any tangible medium including or storing a program. The program may be used by or used in conjunction with an instruction execution system, apparatus, or device. In the present disclosure, the computer-readable signal medium may include a data signal propagated on a baseband or as a part of a carrier, and computer-readable program codes are carried in the data signal. The data signal propagated in this manner may be in multiple forms and includes, and is not limited to, an electromagnetic signal, an optical signal, or any suitable combination thereof. The computer-readable signal medium may also be any computer-readable medium other than the computer-readable storage medium. The computer-readable signal medium may send, propagate, or transmit a program used by or in conjunction with an instruction execution system, apparatus, or device. The program codes included on the computer-readable medium may be transmitted via any appropriate medium which includes, but is not limited to, a wire, an optical cable, a radio frequency (RF), or any appropriate combination thereof.

In some embodiments, clients and servers may communicate using any currently known or future developed network protocol, such as HTTP (HyperText Transfer Protocol) and may be interconnected with any form or medium of digital data communication (such as a communication network). Examples of the communication network include a local area network (LAN), a wide area network (WAN), an internet (such as the Internet), and a peer-to-peer network (such as an Ad-Hoc network), as well as any currently known or future developed network.

The preceding computer-readable medium may be included in the preceding electronic device or may exist alone without being assembled into the electronic device.

The preceding computer-readable medium carries one or more programs. When the one or more programs are executed by the electronic device, the electronic device is configured to receive the effect preview instruction for the target effect; and in response to the effect preview instruction, display the target preview in the first area of the capturing interface and display the target media content in the second area of the capturing interface. The target preview is the preview of a picture captured with the target effect. The target media content is the media content recorded with the target effect.

Computer program codes for performing the operations in the present disclosure may be written in one or more programming languages or combination thereof. The preceding one or more programming languages include, but are not limited to, object-oriented programming languages such as Java, Smalltalk, and C++, as well as conventional procedural programming languages such as C or similar programming languages. Program codes may be executed entirely on a user computer, partly on a user computer, as a stand-alone software package, partly on a user computer and partly on a remote computer, or entirely on a remote computer or a server. In the case relate to the remote computer, the remote computer may be connected to the user computer via any kind of network including a local area network (LAN) or a wide area network (WAN), or may be connected to an external computer (for example, via the Internet through an Internet service provider).

The flowcharts and block diagrams in the drawings show the possible architecture, function, and operation of the system, method, and computer program product according to various embodiments of the present disclosure. In this regard, each block in the flowcharts or block diagrams may represent a module, a program segment, or part of codes that contains one or more executable instructions for implementing specified logical functions. It is also to be noted that in some alternative implementations, the functions marked in the blocks may occur in an order different from those marked in the drawings. For example, two successive blocks may, in fact, be executed substantially in parallel or in a reverse order, which depends on the functions involved. It is also to be noted that each block in the block diagrams and/or flowcharts and a combination of blocks in the block diagrams and/or flowcharts may be implemented by a specific-purpose hardware-based system which performs specified functions or operations or a combination of specific-purpose hardware and computer instructions.

The units involved in the embodiments of the present disclosure may be implemented by software or hardware. The name of a module is not intended to limit the unit in a certain circumstance.

The functions described above herein may be executed, at least partially, by one or more hardware logic components. For example, and without limitations, example types of hardware logic components that may be used include a field-programmable gate array (FPGA), an application-specific integrated circuit (ASIC), an application-specific standard product (ASSP), a system on a chip (SOC), a complex programmable logic device (CPLD) and the like.

In the context of the present disclosure, the machine-readable medium may be a tangible medium that may include or store a program that is used by or used in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any suitable combination thereof. Concrete examples of the machine-readable storage medium may include an electrical connection based on one or more wires, a portable computer disk, a hard disk, a random-access memory (RAM), a read-only memory (ROM), an erasable programmable read-only memory (EPROM) or a flash memory, an optical fiber, a portable compact disc read-only memory (CD-ROM), an optical storage device, a magnetic storage device, or any appropriate combination thereof.

According to one or more embodiments of the present disclosure, example 1 provides a method for displaying a capturing interface. The method includes the steps below.

An effect preview instruction for a target effect is received.

In response to the effect preview instruction, a target preview is displayed in a first area of the capturing interface, and target media content is displayed in a second area of the capturing interface. The target preview is a preview of a picture captured with the target effect. The target media content is media content recorded with the target effect.

According to one or more embodiments of the present disclosure, example 2, according to the method described in example 1, further includes the steps below before the effect preview instruction for the target effect is received.

In response to a display instruction of an effect interface, the effect interface is displayed. A preset identifier of at least one effect is displayed in the effect interface. The preset identifier is configured to trigger execution of the effect preview instruction.

According to one or more embodiments of the present disclosure, in example 3, according to the method described in example 2, the preset identifier includes an effect identifier and/or a previewed picture, and the previewed picture is captured with a corresponding effect.

According to one or more embodiments of the present disclosure, example 4, according to the method described in example 2, further includes the steps below after the effect interface is displayed.

In response to a first adjustment instruction for the effect interface, a display size of the effect interface is adjusted.

According to one or more embodiments of the present disclosure, example 5, according to the method described in example 2, further includes the steps below.

In response to the effect preview instruction, the capturing button is displayed in the capturing interface. The capturing button is configured to trigger capturing with the current previewed effect.

According to one or more embodiments of the present disclosure, example 6, according to the method described in example 1, further includes the steps below.

In response to the effect preview instruction, at least one effect identifier is displayed in a third area of the capturing interface. The at least one effect identifier includes a target effect identifier of the target effect.

According to one or more embodiments of the present disclosure, example 7, according to the method described in example 6, further includes at least one of the steps below after the at least one effect identifier is displayed in the third area of the capturing interface.

In response to an identifier switch instruction, an effect identifier displayed in the third area is switched.

In response to a second adjustment instruction for the third area, a display position of the third area is adjusted.

According to one or more embodiments of the present disclosure, example 8, according to the method described in any one of examples 1 to 7, further includes the steps below after the target preview is displayed in the first area of the capturing interface, and the target media content is displayed in the second area of the capturing interface.

In response to an effect switch instruction acting in the capturing interface, a current previewed effect in the capturing interface is switched.

According to one or more embodiments of the present disclosure, example 9, according to the method described in any one of examples 1 to 7, further includes the steps below after the target preview is displayed in the first area of the capturing interface, and the target media content is displayed in the second area of the capturing interface.

In response to an exchanging instruction acting in the capturing interface, the first area and the second area are exchanged.

According to one or more embodiments of the present disclosure, example 10, according to the method described in any one of examples 1 to 7, further includes at least one of the steps below after the target preview is displayed in the first area of the capturing interface, and the target media content is displayed in the second area of the capturing interface.

In response to a third adjustment instruction for the second area, a display size of the second area and/or a display position of the second area is adjusted.

In response to a display canceling instruction for the second area, the display of the second area is canceled, and the current preview is displayed in the first area. The current preview is the preview of a current picture captured with the target effect.

According to one or more embodiments of the present disclosure, example 11 provides an apparatus for displaying a capturing interface. The apparatus includes an instruction receiving module and a preview module.

The instruction receiving module is configured to receive an effect preview instruction for a target effect.

The preview module is configured to, in response to the effect preview instruction, display a target preview in a first area of the capturing interface and display target media content in a second area of the capturing interface. The target preview is a preview of a picture captured with the target effect. The target media content is media content recorded with the target effect.

According to one or more embodiments of the present disclosure, example 12 provides an electronic device. The electronic device includes one or more processors and a memory configured to store one or more programs.

The one or more programs, when executed by the one or more processors, cause the one or more processors to execute the method for displaying a capturing interface according to any one of examples 1 to 10.

According to one or more embodiments of the present disclosure, example 13 provides a computer-readable storage medium. The storage medium stores a computer program. The computer program, when executed by a processor, implements the method for displaying a capturing interface according to any one of examples 1 to 10.

The preceding description is merely illustrative of preferred embodiments of the present disclosure and the technical principles used therein. Those of ordinary skill in the art should understand that the scope referred to in the disclosure is not limited to the technical solutions formed by the particular combination of the preceding technical features, but intended to cover other technical solutions which may be formed by any combination of the preceding technical features or their equivalents without departing from the concept of the disclosure. For example, technical solutions formed by mutual substitutions of the preceding feature and the technical features disclosed in the present disclosure (but not limited to) that have similar functions.

In addition, although the operations are depicted in a particular order, this should not be construed as requiring that such operations should be performed in the particular order shown or in a sequential order. In certain circumstances, multitasking and parallel processing may be advantageous. Similarly, although specific implementation details are included in the above discussion, these should not be construed as limiting the scope of the present disclosure. Some features described in the context of separate embodiments may also be implemented in combination in a single embodiment. Conversely, various features described in the context of a single embodiment may also be implemented in multiple embodiments, individually, or in any suitable sub-combination.

Although the subject matter is described in the language specific to structural features and/or methodological logic acts, it is to be understood that the subject matter defined in the appended claims is not necessarily limited to the specific features or acts described above. Conversely, the specific features and acts described above are merely example forms of implementing the claims.

## Claims

1. A method for displaying a capturing interface, comprising:
receiving an effect preview instruction for a target effect; and
in response to the effect preview instruction, displaying a target preview in a first area of the capturing interface and displaying target media content in a second area of the capturing interface, wherein the target preview is a preview of a captured picture with the target effect, and the target media content is media content recorded with the target effect.

2. The method according to claim 1, wherein before receiving the effect preview instruction for the target effect, the method further comprises:
in response to a display instruction of an effect interface, displaying the effect interface, wherein a preset identifier of at least one effect is displayed in the effect interface, and the preset identifier is configured to trigger execution of the effect preview instruction.

3. The method according to claim 2, wherein the preset identifier comprises at least one of an effect identifier or a previewed picture, and the previewed picture is captured with an effect corresponding to the previewed picture.

4. The method according to claim 2 or 3, wherein after displaying the effect interface, the method further comprises:
in response to a first adjustment instruction for the effect interface, adjusting a display size of the effect interface.

5. The method according to claim 2, further comprising:
in response to the effect preview instruction, displaying a capturing button in the capturing interface, wherein the capturing button is configured to trigger capturing with a current previewed effect.

6. The method according to any one of claims 1 to 5, further comprising:
in response to the effect preview instruction, displaying at least one effect identifier in a third area of the capturing interface, wherein the at least one effect identifier comprises a target effect identifier of the target effect.

7. The method according to claim 6, wherein after displaying the at least one effect identifier in the third area of the capturing interface, the method further comprises at least one of the following:
in response to an identifier switch instruction, switching an effect identifier displayed in the third area; or
in response to a second adjustment instruction for the third area, adjusting a display position of the third area.

8. The method according to any one of claims 1 to 7, wherein after displaying the target preview in the first area of the capturing interface and displaying the target media content in the second area of the capturing interface, the method further comprises:
in response to an effect switch instruction acting in the capturing interface, switching a current previewed effect in the capturing interface.

9. The method according to any one of claims 1 to 8, wherein after displaying the target preview in the first area of the capturing interface and displaying the target media content in the second area of the capturing interface, the method further comprises:
in response to an exchanging instruction acting in the capturing interface, exchanging the first area and the second area, exchanging an area where a current preview is displayed and an area where current media content is displayed, wherein the current preview image is a preview of a current preview effect, and the current media content is media content shot by using the current preview effect.

10. The method according to claim 1 to 7, after displaying the target preview in the first area of the capturing interface and displaying the target media content in the second area of the capturing interface, further comprising at least one of the following:
in response to a third adjustment instruction for the second area, adjusting at least one of a display size of the second area or a display position of the second area; or
in response to a display canceling instruction for the second area, canceling display of the second area and displaying a current preview in the first area, wherein the current preview is preview of a current preview effect.

11. A display apparatus for displaying a capturing interface, comprising:
an instruction receiving module, configured to receive an effect preview instruction for a target effect; and,
a preview module, configured to, in response to the effect preview instruction, display a target preview in a first area of the capturing interface and displaying target media content in a second area of the capturing interface, wherein the target preview is a preview of a captured picture with the target effect, and the target media content is media content recorded with the target effect.

12. An electronic device, comprising:
at least one processor; and
a memory communicatively connected to the at least one processor,
wherein the memory stores a computer program executable by the at least one processor, and the computer program, when executed by the at least one processor, causes the at least one processor to execute the method for displaying a capturing interface according to any one of claims 1 to 10.

13. A computer-readable storage medium storing a computer instruction, wherein the computer instruction, when executed by a processor, causes the processor to execute the method for displaying a capturing interface according to any one of claims 1 to 10.
